# EUROPEAN PATENT SPECIFICATION

(11) **EP 2 930 016 B1**
(45) Date of publication and mention of the grant of the patent: **18.12.2019**
(21) Application number: 15162725.4
(22) Date of filing: 08.04.2015
(51) Int. Cl.: B32B 5/00

(54) **A HALOGEN-FREE COMPOSITE-BASE CEM-3 COPPER CLAD LAMINATE AND PREPARATION METHOD THEREOF**
HALOGENFREIES VERBUNDSTOFFBASIERTES, KUPFERKASCHIERTES CEM-3-LAMINAT UND HERSTELLUNGSVERFAHREN DAFÜR
COMPOSITE SANS HALOGÈNE À BASE DE STRATIFIÉ REVÊTU DE CUIVRE CEM-3 ET PROCÉDÉ DE PRÉPARATION DE CELUI-CI

(30) Priority: 09.04.2014 CN 201410140746
(43) Date of publication of application: 14.10.2015
(73) Proprietor: Shengyi Technology Co., Ltd., Guangdong 523808 (CN)
(72) Inventor: Wang, Biwu, 523808 Dongguan City (CN); He, Yueshan, 523808 Dongguan City (CN); Xi, Long, 523808 Dongguan City (CN); Ye, Jinrong, 523808 Dongguan City (CN)
(74) Representative: Wallinger, Michael

(56) References cited:
- WO-A1-2013/056426
- CN-A- 101 376 735
- CN-A- 101 578 010
- CN-A- 101 848 604
- CN-A- 103 101 252
- US-A1- 2013 075 138
- US-A1- 2013 115 472

## Description

### Technical Field

The present invention relates to a halogen-free flame-resistant CEM-3 copper clad laminate, which can be used in printed circuit board, belonging to the field of electronic materials.

### Background Art

CEM-3 (Composite Epoxy Material) is the composite copper clad laminate which is made of epoxy resin fiberglass cloth bonding sheet for surface materials and epoxy resin fiberglass paper bonding sheet for core material, and formed by heat pressing after being covered with copper foil on one side or double sides. CEM-3 has excellent punching processing that neat and complex shape can be punched out, can prolong service life of drilling bit compared with FR-4, and has a lower price than FR-4. It is a composite copper clad laminate with good comprehensive performance and reasonable price, thereby meeting the requirements of low cost, high quality and high reliability of the electronic products.

In the copper clad laminates for the traditional printed circuit, brominated epoxy resin is mainly used, wherein the flame resistance function of plate is achieved with bromine. In recent years, the combustion waste of electrical and electronic equipment containing halogen elements of bromine and chlorine has been detected to contain carcinogens of dioxin and diphenylene oxide and the halogen-containing products may release toxic hydrogen halide in the combustion process. In July 1, 2006, the two environment protection directives of Europe Union, "Waste Electrical and Electronic Equipment Directive " and "The Restriction of the Use of Certain Hazardous Substances in Electrical and Electronic Equipment" were formally implemented. The implementation of these two directives make the development of the halogen-free flame resistant copper clad laminate become the emphasis of the industry. CEM-3 copper clad laminate is mainly for preparation of printed circuit board for the civilian electrical and electronic products such as advanced appliances, game consoles and OA equipments. Those civilian electrical and electronic products are produced in huge quantity and updated quickly, thus resulting in a large number of wastes, many of which are treated with incineration. If they are treated improperly, they can easily cause serious pollution to the environment, as well as the harm to human health. Therefore, the development of the halogen free CEM-3 copper clad laminate is important measure not only for meeting the needs of the market, but also for environment protection and concerning about human health, thus having a great significance.

Furthermore, the traditional common CEM-3 is usually made by the method of adding large amount of inorganic filler aluminum hydroxide to achieve high CTI performance, but heat resistance and alkali resistance of aluminum hydroxide is not good, thus heat resistance and alkali resistance of the plate is difficult to meet the requirements of the market. Moreover, in order to meet the requirements of lead-free process, the prior preparation process usually use the linear phenol-formaldehyde as curing agent to improve the heat resistance of the plate, but brittleness of the plate is increased, thus punching processing performance of the plate is sacrificed.

### Summary of the Invention

Against the problems in the prior art, the present invention aims to provide a halogen-free composite-base CEM-3 copper clad laminate, which has high CTI and heat resistance, and has excellent flame resistance, punching performance and alkali resistance.

In order to achieve the above aims, the present invention uses the following technical solution:
A halogen-free composite-base CEM-3 copper clad laminate is composed of a copper foil, surface material and core material, wherein each of the surface material and the core material comprises a filler composition, consisting of organic and inorganic fillers, and curing agent,
wherein the filler composition for surface material comprises:

| | |
|---|---|
| aluminum hydroxide | 20∼50 weight parts |
| melamine cyanurate | 5∼40 weight parts |
| boehmite | 0∼30 weight parts |
| barium sulfate | 0∼30 weight parts |

the content of the boehmite and barium sulfate is not 0 at the same time; and wherein the filler composition for core material comprises according to weight parts:

| | |
|---|---|
| aluminum hydroxide | 20∼50 weight parts |
| melamine cyanurate | 5∼50 weight parts |
| boehmite | 0∼40 weight parts |
| barium sulfate | 0∼40 weight parts |
| talcum powder | 0∼40 weight parts |
| silicon dioxide | 0∼40 weight parts |

the contents of the boehmite, barium sulfate, talcum powder and silicon dioxide are not 0 at the same time.

The filler composition for surface material consists of aluminum hydroxide, melamine cyanurate (MCA), boehmite and barium sulfate. Aluminum hydroxide has flame resistance and high CTI, but its heat resistance and alkali resistance are poor; melamine cyanurate is a organic filler with high nitrogen content, which has function of flame resistance, high CTI and can improve punching performance of the plate, but its heat resistance is poor; boehmite and barium sulfate has high CTI and good heat resistance and alkali resistance, but its flame resistance is poor. While the synergistic effect of the combination of the organic and inorganic fillers of the present invention makes the CEM-3 copper clad laminate have high CTI, and balanced performance on flame resistance, heat resistance, punching processability and alkali resistance.

In the filler composition for the surface material:
The weight parts of the aluminum hydroxide are, for example, 22, 25, 28, 31, 34, 37, 40, 42, 44, 46 or 48.

The weight parts of the melamine cyanurate are, for example, 8, 11, 14, 17, 20, 23, 26, 29, 31, 33, 35, 37 or 39.

The weight parts of the boehmite are, for example, 0.05, 2, 5, 8, 11, 14, 17, 20, 22, 24, 26 or 28.

The weight parts of the barium sulfate are, for example, 0.05, 2, 5, 8, 11, 14, 17, 20, 22, 24, 26 or 28.

The filler composition for the core material consists of aluminum hydroxide, melamine cyanurate (MCA), boehmite, barium sulfate, silicon dioxide and talc powder. Aluminum hydroxide has flame resistance and high CTI, but its heat resistance and alkali resistance are poor; melamine cyanurate, which is a kind of organic filler with high nitrogen content, has flame resistance and high CTI and can improve the punching performance of the plate; boehmite and barium sulfate have high CTI and excellent heat resistance and alkali resistance. While the synergistic effect of the combination of the organic and inorganic fillers of the present invention makes CEM-3 copper clad laminate have high CTI, and balanced performance on the flame resistance, heat resistance, punching processability and alkali resistance.

In the filler composition for core material:
The weight parts of the aluminum hydroxide are, for example, 22, 24, 26, 28, 30, 32, 34, 36, 38, 40, 42, 44, 46 or 48.

The weight parts of the melamine cyanurate are, for example, 7, 10, 13, 16, 19, 22, 25, 28, 31, 34, 37, 40, 42, 44, 46 or 48.

The weight parts of the boehmite are, for example, 0.05, 2, 5, 8, 11, 14, 16, 18, 20, 22, 24, 26, 28, 30, 32, 34, 36 or 38.

The weight parts of the barium sulfate are, for example, 0.05, 2, 5, 8, 11, 14, 16, 18, 20, 22, 24, 26, 28, 30, 32, 34, 36 or 38.

The weight part of the talc powder are, for example, 0.05, 2, 5, 8, 11, 14, 16, 18, 20, 22, 24, 26, 28, 30, 32, 34, 36 or 38.

The weight parts of the silicon dioxide are, for example, 0.05, 2, 5, 8, 11, 14, 16, 18, 20, 22, 24, 26, 28, 30, 32, 34, 36 or 38.

In the present invention, each of the core material and surface material comprises a organic and inorganic filler composition, making the plate have high CTI and good heat resistance and alkali resistance, and improving the punching processability of the plate.

Preferably, on the basis of the above technical solutions, each of the curing agent for the surface material and that for the core material independently is an amine type composite curing agent, consisting of dicyandiamide and diamino-diphenyl sulfone. In the present invention, the amine composite curing agent consisting of dicyandiamide and diamino-diphenyl is employed, avoiding the disadvantage of poor heat resistance brought by using DICY alone for curing and the disadvantage of poor punching processability brought by using linear phenol formaledlyde resin as a curing agent, thereby achieving balance on heat resistance and punching processability.

Preferably, on the basis of the above technical solutions, the mass ratio of the dicyandiamide and diamino-diphenyl sulfone in each of the curing agent for the surface material and that for the core material independently are 3∼7:7∼3, such as 3:6.5, 3:6, 3:5.5, 3:5, 3:4.5, 3:4, 3:3.5, 1:1, 3.5:3, 4:3, 4.5:3, 5:3, 5.5:3, 6:3, or 6.5:3, more preferably 4∼6:6∼4.

In the present invention, through the compound cooperation of the combination of theorganic and inorganic fillers and the amine type curing agent, the prepared halogen-free flame-resistant copper clad laminate achieves a balance of each performance. It has high CTI of >600V and high heat resistance meeting the requirements of lead-free process, and has good punching processability and alkali resistance.

The second aim of the present invention is to provide a preparation method of the above halogen-free composite-base CEM-3 copper clad laminate, which comprises the following steps:
1) preparing a resin glue for the surface material using a resin composition containing the filler composition for the surface material and the curing agent, and then soaking a fiberglass cloth into the resin glue to prepare the surface material;
2) preparing a resin glue for the core material using a resin composition containing the filler composition used for the core material and the curing agent, and then soaking a fiberglass paper into the resin glue to prepare core material; and
3) stacking at least one piece of the core material, pasting at least one piece of the surface material onto each of the top and bottom surfaces of the stacked at least one piece of the core material, covering copper foil on one or both sides, and conducting heat pressing forming to obtain the halogen-free composite-base CEM-3 copper clad laminate.

Preferably, on the basis of the above technical solutions, the resin composition used in the steps (1) comprises the following components:

| | |
|---|---|
| epoxy resin | 60∼120 weight parts |
| curing agent | 2.0∼6.0 weight parts |
| curing promotor | 0.01∼1.0 weight parts |
| filler composition for the surface material | 20∼100 weight parts |

The weight parts of the epoxy resin are, for example, 63, 66, 69, 72, 75, 78, 81, 84, 87, 90, 93, 96, 99, 102, 105, 108, 111, 114 or 117.

The weight parts of curing agent are, for example, 2.2, 2.4, 2.6, 2.8, 3, 3.2, 3.4, 3.6, 3.8, 4, 4.2, 4.4, 4.6, 4.8, 5, 5.2, 5.4, 5.6 or 5.8.

The weight parts of the curing promoter are, for example, 0.05, 0.1, 0.2, 0.3, 0.4, 0.5, 0.6, 0.7, 0.8 or 0.9.

The weight parts of the filler composition for surface material are, for example, 25, 30, 35, 40, 45, 50, 60, 65, 70, 75, 80, 85, 90 or 95.

Preferably, on the basis of the above technical solutions, the resin composition used in the steps (2) comprises the following components:

| | |
|---|---|
| epoxy resin | 60∼120 weight parts |
| curing agent | 2.0∼6.0 weight parts |
| curing promotor | 0.01∼1.0 weight parts |
| filler composition for the core material | 50∼200 weight parts |

The weight parts of the epoxy resin are, for example, 63, 66, 69, 72, 75, 78, 81, 84, 87, 90, 93, 96, 99, 102, 105, 108, 111, 114 or 117.

The weight parts of curing agent are, for example, 2.2, 2.4, 2.6, 2.8, 3, 3.2, 3.4, 3.6, 3.8, 4, 4.2, 4.4, 4.6, 4.8, 5, 5.2, 5.4, 5.6 or 5.8.

The weight parts of the curing promoter are, for example, 0.05, 0.1, 0.2, 0.3, 0.4, 0.5, 0.6, 0.7, 0.8 or 0.9.

The weight parts of the filler composition for core material are, for example, 60, 70, 80, 90, 100, 110, 120, 130, 140, 150, 160, 170, 180 or 190.

Preferably, on the basis of the above technical solutions, the epoxy resin is selected from the group consisting of a mixture of bisphenol A type epoxy resin and phosphorus-containing epoxy resin, a mixture of phenol formaldehyde epoxy resin and phosphorus-containing epoxy resin, and a mixture of a combination of bisphenol A type epoxy resin and phenol formaldehyde epoxy resin and phosphorus-containing epoxy resin;

Preferably, on the basis of the above technical solutions, the phosphorus-containing epoxy resin is phosphorus and nitrogen containing epoxy resin.

Preferably, on the basis of the above technical solutions, phosphorus content of the phosphorus-containing epoxy resin is 1∼5%, such as 1.3%, 1.6%, 1.9%, 2.2%, 2.5%, 2.8%, 3.1%, 3.4%, 3.7%, 4%, 4.3%, 4.6% or 4.9%, and the epoxy equivalent is 150∼500g/eq, such as 180g/eq, 200g/eq, 230g/eq, 260g/eq, 290g/eq, 320g/eq, 350g/eq, 380g/eq, 410g/eq, 440g/eq, 460g/eq or 480g/eq, more preferably, the phosphorus content is 2-3% and the epoxy equivalent is 250∼400g/eq.

Preferably, on the basis of the above technical solutions, phosphorus content of the phosphorus and nitrogen containing epoxy resin is 1∼5%, such as 1.3%, 1.6%, 1.9%, 2.2%, 2.5%, 2.8%, 3.1%, 3.4%, 3.7%, 4%, 4.3%, 4.6% or 4.9%, nitrogen content thereof is 0.10∼10%, such as, 1%, 0.5% 2%, 3%, 4%, 5%, 6%, 7%, 8% or 9%, and epoxy equivalent is 150∼500g/eq, such as 180g/eq, 200g/eq, 230g/eq, 260g/eq, 290g/eq, 320g/eq, 350g/eq, 380g/eq, 410g/eq, 440g/eq, 460g/eq or 480g/eq, more preferably, the phosphorus content is 1.5-2.5%, the nitrogen content is 0.3-2%, and the epoxy equivalent is 250∼350g/eq.

Preferably, on the basis of the above technical solutions, weight of the phosphorus atoms contained in the epoxy resin is 1.0∼2.4wt% of the total weight of epoxy resin, curing agent and curing promotor, such as 1.1wt%, 1.2wt%, 1.3wt%, 1.4wt%, 1.5wt%, 1.6wt%, 1.7wt%, 1.8wt%, 1.9wt%, 2wt%, 2.1wt%, 2.2wt% or 2.3wt%, more preferably 1.5∼2.0wt%.

Preferably, on the basis of the above technical solutions, the curing promotor is an imidazole curing promotor, preferably any one or a mixture of at least two selected from the group consisting of 2- methyl imidazole, 1- methyl imidazole, 2-ethyl-4-methyl imidazole, 2-phenyl imidazole, 2-undecyl-imidazole and 2-phenyl-4-methylimidazole.

Preferably, on the basis of the above technical solutions, the solvent for each of the resin glue for surface material and that for core material independently are any one or a combination of at least two selected from the group consisting of N,N-dimethyl-Formamide, acetone, butanone, cyclohexanone, 2-methoxyethanol, 1-Methoxy-2-propanol and 2-methoxy-1-methylethyl ester.

Preferably, on the basis of the above technical solutions, the solid content of the resin glue for surface material is 65∼75%.

Preferably, on the basis of the above technical solution provided by the present invention, the solid content of the resin glue for core material is 60-80%. Preferably, on the basis of the above technical solutions, the steps (1) is conducted at a temperature of 130∼210 °C (such as 140°C, 150 °C, 160 °C, 170 °C, 180 °C, 190 °C or 200 °C) to prepare the surface material.

Preferably, on the basis of the above technical solutions, the steps (2) is conducted at a temperature of 130∼210 °C (such as 140°C, 150 °C, 160 °C, 170 °C, 180 °C, 190 °C or 200 °C) to prepare the core material.

Preferably, on the basis of the above technical solutions, the heat pressing forming in the steps (3) is conducted at a temperature of 80∼200 °C and a pressure of 10∼100kg/cm².

In an exemplary step (3), 1∼10 pieces of the core materials are stacked.

Compared with the prior art, the present invention has the following beneficial effects:
In the present invention, through the compound cooperation of a composition of organic and inorganic fillers and an amine type curing agent, the prepared halogen-free flame-resistant copper clad laminates achieve balance on each performance, have high CTI and heat resistance and good punching processability and alkali resistance. The copper clad laminates have CTI of >600V, thermal delamination time T288 of >30 min, thermal decomposition temperature Td of >340°C, and 288°Csoldering time of >300s, thereby meeting the requirements of lead-free process.

### Detailed Description

The following description will further illustrate the technical solutions of the present invention with reference to specific embodiments.
(A) Epoxy resin
   (A-1) XZ 92530 (brand name of phosphorus-containing epoxy resin of Dow Chemical)
   (A-2) NPE-285 (brand name of phosphorus-containing epoxy resin of Taiwan Jin Yi Chemical)
   (A-3) BE501M70 (brand name of bisphenol A epoxy resin of Taiwan Changchun Artificial Resin Factory)
(B) Curing agent
   (B-1) Dicyandiamide (Ningxia Darong Industrial Group Co., Ltd.)
   (B-2) 4,4'-Diaminodiphenylsulfone (Suzhou Yinsheng Chemical Co., Ltd.)
(C) Promotor
   (C-1) 2MZ (Japan Shikoku Chemical 2- methyl imidazole)
(D) Filler
   (D-1) aluminum hydroxide (average particle diameter is 0.05 to 5 µm, purity is more than 99%)
   (D-2) boehmite (average particle diameter is 0.05 to 5 µm, purity is more than 99%)
   (D-3) barium sulfate (average particle diameter is 0.05 to 5 µm, purity is more than 99%)
   (D-4) melamine cyanurate (average particle diameter is 0.05 to 5 µm, purity is more than 99%)
   (D-5) silicon dioxide (average particle diameter is 0.05 to 5 µm, purity is more than 99%)
   (D-6) talcum powder (average particle diameter is 0.05 to 10 µm, purity is more than 99%)
(E) solvent
   (E-1) N,N-Dimethylformamide (DMF)

Performances of CEM-3 copper clad laminate prepared by the specific material formulation of embodiments 1-6 are shown as table 1.

**Table 1**

| | | Embodiment 1 | Embodiment 2 | Embodiment 3 | Embodiment 4 | Embodiment 5 | Embodiment 6 |
|---|---|---|---|---|---|---|---|
| Surface material | | | | | | | |
| A-1 | | 60 | 60 | 60 | 60 | 60 | 60 |
| A-2 | | 0 | 0 | 0 | 0 | 0 | 0 |
| A-3 | | 40 | 40 | 40 | 40 | 40 | 40 |
| B-1 | | 2.5 | 2.5 | 2.5 | 2.5 | 2.5 | 2.5 |
| B-2 | | 2 | 2 | 2 | 2 | 2 | 2 |
| C-1 | | 0.1 | 0.1 | 0.1 | 0.1 | 0.1 | 0.1 |
| D-1 | | 20 | 20 | 20 | 20 | 20 | 20 |
| D-2 | | 20 | 0 | 10 | 10 | 10 | 10 |
| D-3 | | 0 | 20 | 10 | 10 | 10 | 10 |
| D-4 | | 10 | 10 | 10 | 10 | 10 | 10 |
| D-5 | | 0 | 0 | 0 | 0 | 0 | 0 |
| E-1 | | Proper amount | Proper amount | Proper amount | Proper amount | Proper amount | Proper amount |

| Core material | | | | | | | |
|---|---|---|---|---|---|---|---|
| A-1 | | 60 | 60 | 60 | 60 | 60 | 60 |
| A-2 | | 0 | 0 | 0 | 0 | 0 | 0 |
| A-3 | | 40 | 40 | 40 | 40 | 40 | 40 |
| B-1 | | 2.5 | 2.5 | 2.5 | 2.5 | 2.5 | 2.5 |
| B-2 | | 2 | 2 | 2 | 2 | 2 | 2 |
| C-1 | | 0.1 | 0.1 | 0.1 | 0.1 | 0.1 | 0.1 |
| D-1 | | 20 | 20 | 20 | 50 | 20 | 20 |
| D-2 | | 20 | 20 | 20 | 10 | 40 | 20 |
| D-3 | | 20 | 20 | 20 | 0 | 0 | 20 |
| D-4 | | 20 | 20 | 20 | 20 | 20 | 20 |
| D-5 | | 20 | 20 | 20 | 10 | 0 | 0 |
| D-6 | | 0 | 0 | 0 | 10 | 20 | 20 |
| E-1 | | Proper amount | Proper amount | Proper amount | Proper amount | Proper amount | Proper amount |

| Plate performances | | | | | | | |
|---|---|---|---|---|---|---|---|
| Tg (DSC,°C) | | 130 | 130 | 130 | 130 | 130 | 130 |
| CTI(V) | | >600 | >600 | >600 | >600 | >600 | >600 |
| T288(min) | | >30 | >30 | >30 | >30 | >30 | >30 |
| Soldering (288°C soldering limits, s) | | >350 | >350 | >350 | >300 | >350 | >350 |
| Combustibility | | V-0 | V-0 | V-0 | V-0 | V-0 | V-0 |
| PS (N/mm) | | 1.6 | 1.6 | 1.6 | 1.6 | 1.6 | 1.6 |
| Td(°C) | | >345 | >345 | >345 | >340 | >345 | >345 |
| Punching | | ★★★★ | ★★★★ | ★★★★ | ★★★★ | ★★★★★ | ★★★★★ |
| Alkali resistance | | ○ | ○ | ○ | ○ | ○ | ○ |
| Halogen content (%) | Cl | 0.04 | 0.04 | 0.04 | 0.04 | 0.04 | 0.04 |
| | Br | 0 | 0 | 0 | 0 | 0 | 0 |

Performances of CEM-3 copper clad laminate prepared by the specific material formulation of embodiments 7-10 and comparative examples 1-3 are shown as table 2.

**Table 2**

| | | Embodiment 7 | Embodiment 8 | Embodiment 9 | Embodiment 10 | Comparative example 1 | Comparative example 2 | Comparative example 3 |
|---|---|---|---|---|---|---|---|---|
| Surface material | | | | | | | | |
| A-1 | | 60 | 60 | 50 | 0 | 60 | 60 | 60 |
| A-2 | | 0 | 0 | 0 | 60 | 0 | 0 | 0 |
| A-3 | | 40 | 40 | 50 | 40 | 40 | 40 | 40 |
| B-1 | | 2.5 | 2.5 | 2.3 | 2.5 | 3.5 | 3.5 | 2.5 |
| B-2 | | 2 | 2 | 2 | 2 | 0 | 0 | 2 |
| C-1 | | 0.1 | 0.1 | 0.1 | 0.1 | 0.1 | 0.1 | 0.1 |
| D-1 | | 20 | 20 | 20 | 20 | 50 | 25 | 50 |
| D-2 | | 10 | 10 | 20 | 20 | 0 | 0 | 0 |
| D-3 | | 10 | 10 | 0 | 0 | 0 | 0 | 0 |
| D-4 | | 10 | 10 | 10 | 10 | 0 | 0 | 0 |
| D-5 | | 0 | 0 | 0 | 0 | 0 | 0 | 0 |

| E-1 | | Proper amount | Proper amount | Proper amount | Proper amount | Proper amount | Proper amount | Proper amount |
|---|---|---|---|---|---|---|---|---|
| Core material | | | | | | | | |
| A-1 | | 60 | 60 | 50 | 0 | 60 | 60 | 60 |
| A-2 | | 0 | 0 | 0 | 60 | 0 | 0 | 0 |
| A-3 | | 40 | 40 | 50 | 40 | 40 | 40 | 40 |
| B-1 | | 2.5 | 2.5 | 2.3 | 2.5 | 3.5 | 3.5 | 2.5 |
| B-2 | | 2 | 2 | 2 | 2 | 0 | 0 | 2 |
| C-1 | | 0.1 | 0.1 | 0.1 | 0.1 | 0.1 | 0.1 | 0.1 |
| D-1 | | 40 | 20 | 20 | 20 | 100 | 50 | 100 |
| D-2 | | 20 | 30 | 20 | 20 | 0 | 0 | 0 |
| D-3 | | 0 | 30 | 20 | 20 | 0 | 0 | 0 |
| D-4 | | 40 | 20 | 20 | 20 | 0 | 0 | 0 |
| D-5 | | 0 | 30 | 20 | 20 | 0 | 50 | 0 |
| D-6 | | 0 | 20 | 0 | 0 | 0 | 0 | 0 |

| E-1 | | Proper amount | Proper amount | Proper amount | Proper amount | Proper amount | Proper amount | Proper amount |
|---|---|---|---|---|---|---|---|---|
| Plate performances | | | | | | | | |
| Tg (DSC,°C) | | 130 | 130 | 125 | 135 | 130 | 130 | 130 |
| CTI (V) | | >600 | >600 | >600 | >600 | >600 | >400 | >600 |
| T288 (min) | | >30 | >30 | >30 | >30 | <1min | <3min | >20 |
| Soldering (288°C soldering limits, s) | | >300 | >400 | >350 | >300 | <60 | <90 | >150 s |
| Combustibility | | V-0 | V-0 | V-0 | V-0 | V-0 | V-0 | V-0 |
| PS (N/mm) | | 1.6 | 1.6 | 1.6 | 1.60 | 1.65 | 1.65 | 1.6 |
| Td (°C) | | >340 | >345 | >345 | >340 | 325 | 330 | >335 |
| punching | | ★★★★★ | ★★★★ | ★★★★ | ★★★★ | ★★★★★ | ★★★★ | ★★★ |
| Alkali resistance | | ○ | ○ | ○ | ○ | Δ | ○ | Δ |
| Halogen content (%) | Cl | 0.04 | 0.04 | 0.04 | 0.04 | 0.04 | 0.04 | 0.04 |
| | Br | 0 | 0 | 0 | 0 | 0 | 0 | 0 |

**Table 3**

| | | Embodiment 11 | Embodiment 12 | Comparative example 4 | Comparative example 5 | Comparative example 6 | Comparative example 7 | Comparative example 8 |
|---|---|---|---|---|---|---|---|---|
| Surface material | | | | | | | | |
| A-1 | | 60 | 60 | 60 | 60 | 60 | 60 | 60 |
| A-2 | | 0 | 0 | 0 | 0 | 0 | 0 | 0 |
| A-3 | | 40 | 40 | 40 | 40 | 40 | 40 | 40 |
| B-1 | | 2.5 | 2.5 | 3.5 | 2.5 | 0 | 2.5 | 2.5 |
| B-2 | | 2 | 2 | 0 | 2 | 9.5 | 2 | 2 |
| C-1 | | 0.1 | 0.1 | 0.1 | 0.1 | 0.1 | 0.1 | 0.1 |
| D-1 | | 10 | 30 | 0 | 0 | 0 | 0 | 0 |
| D-2 | | 10 | 20 | 0 | 0 | 0 | 25 | 0 |
| D-3 | | | 20 | 0 | 0 | 0 | 25 | 0 |
| D-4 | | 20 | 10 | 0 | 0 | 0 | 0 | 50 |
| D-5 | | 0 | 0 | 0 | 50 | 0 | 0 | 0 |
| E-1 | | Proper amount | Proper amount | Proper amount | Proper amount | Proper amount | Proper amount | Proper amount |

| Core material | | | | | | | | |
|---|---|---|---|---|---|---|---|---|
| A-1 | | 60 | 60 | 60 | 60 | 60 | 60 | 60 |
| A-2 | | 0 | 0 | 0 | 0 | 0 | 0 | 0 |
| A-3 | | 40 | 40 | 40 | 40 | 40 | 40 | 40 |
| B-1 | | 2.5 | 2.5 | 3.5 | 2.5 | 0 | 2.5 | 2.5 |
| B-2 | | 2 | 2 | 0 | 2 | 9.5 | 2 | 2 |
| C-1 | | 0.1 | 0.1 | 0.1 | 0.1 | 0.1 | 0.1 | 0.1 |
| D-1 | | 20 | 40 | 0 | 0 | 0 | 0 | 0 |
| D-2 | | 20 | 30 | 0 | 0 | 0 | 50 | 0 |
| D-3 | | 20 | 30 | 0 | 0 | 0 | 50 | 0 |
| D-4 | | 20 | 40 | 0 | 0 | 0 | 0 | 100 |
| D-5 | | 0 | 20 | 0 | 100 | 0 | 0 | 0 |
| D-6 | | 0 | 0 | 0 | 0 | 0 | 0 | 0 |
| E-1 | | Proper amount | Proper amount | Proper amount | Proper amount | Proper amount | Proper amount | Proper amount |

| Plate performances | | | | | | | | |
|---|---|---|---|---|---|---|---|---|
| Tg (DSC,°C) | | 130 | 130 | 130 | 130 | 140 | 130 | 130 |
| CTI (V) | | >600 | >600 | 200-300 | 200-300 | 200-300 | >600 | >600 |
| T288 (min) | | >30 | >30 | <1min | >30 | >30 | >30 | >15 |
| Soldering (288°Csoldering limits,s) | | >350 | >350 | >120 | >350 | >400 | >350 | >120 |
| Combustibility | | V-0 | V-0 | V-1 | V-1 | V-1 | V-1 | V-0 |
| PS (N/mm) | | 1.65 | 1.4 | 1.7 | 1.6 | 1.55 | 1.6 | 1.6 |
| Td (°C) | | >340 | >340 | 335 | >345 | >340 | >345 | >345 |
| punching | | ★★★★★ | ★★★★★ | ★★★ | ★★ | ★ | ★★★ | ★★★★ |
| Alkali resistance | | ○ | ○ | Δ | ○ | Δ | ○ | ○ |
| Halogen content (%) | Cl | 0.04 | 0.03 | 0.04 | 0.04 | 0.04 | 0.04 | 0.04 |
| | Br | 0 | 0 | 0 | 0 | 0 | 0 | 0 |

Testing methods for the above performances are as follows:
(1) glass transition temperature (Tg): according to the differential scanning calorimetry (DSC), making measurement by the method of DSC specified in IPC-TM-650 2.4.25;
(2) peel strength (PS) : measuring the peel strength of the metal cover layer according to experiment conditions of "post heat stress" in IPC-TM-650 2.4.8 method;
(3) combustibility: making measurement according to UL 94 vertical burning method.
(4) thermal delamination time T-288:making measurement according to the IPC-TM-650 : 2.4.24.1 method;
(5) thermal decomposition temperature Td : making measurement according to IPC-TM-650 2.4.26;
(6) punching: placing the base material with a thickness of 1.60mm on dies with certain graphics for punching, observing hole quality with naked eyes, making classification into grades 1-5 and presenting with ★ to ★ ★ ★ ★ ★ ★ respectively;
(7) halogen content measurement: making measurement according to the IPC-TM-650 2.3.41 method;
(8) CTI performance measurement: making measurement according to the IEC 60112 method;
(9) alkali resistance: placing 50 × 50mm base material in 10% sodium hydroxide solution at 80 °C, immersing for 60 minutes and observing with naked eyes: (H1) no white spot, (H2) slight white spot, (H3) lamination and foaming; Symbols ○ in the table is for no change, Δ for white spot occurrence, * for lamination and foaming; mode.

## Claims

1. A halogen-free composite-base CEM-3 copper clad laminate consisting of copper foil, surface material and core material, **characterized in that** the surface material and the core material comprise filler compositions, consisting of organic and inorganic fillers, and curing agents,
wherein the surface material comprises the following components:
| | |
|---|---|
| epoxy resin | 60∼120 weight parts |
| curing agent | 2.0∼6.0 weight parts |
| curing promoter | 0.01∼1.0 weight parts |
| filler composition for the surface material | 20∼100 weight parts, |
and
the core material comprises the following components according to the weight parts:
| | |
|---|---|
| epoxy resin | 60∼120 weight parts |
| curing agent | 2.0∼6.0 weight parts |
| curing promoter | 0.01∼1.0 weight parts |
| filler composition for the core material | 50∼200 weight parts, |
wherein the filler composition for the surface material comprises:
| | |
|---|---|
| aluminium hydroxide | 20-50 weight parts |
| melamine cyanurate | 5∼40 weight parts |
| boehmite | 0∼30 weight parts |
| barium sulfate | 0∼30 weight parts, |
and
the contents of the boehmite and barium sulfate are not 0 at the same time; and
wherein the filler composition for the core material comprises:
| | |
|---|---|
| aluminium hydroxide | 20-50 weight parts |
| melamine cyanurate | 5∼50 weight parts |
| boehmite | 0∼40 weight parts |
| barium sulfate | 0∼40 weight parts |
| talc powder | 0∼40 weight parts |
| silicon dioxide | 0∼40 weight parts, |
and
the contents of the boehmite, barium sulfate, talc powder and the silicon dioxide are not 0 at the same time, and
wherein each of the curing agents for the surface material and the core material independently comprises dicyandiamide and diamino diphenyl sulfone.

2. The halogen-free composite-base CEM-3 copper clad laminate according to claim 1, wherein the mass ratios of dicyandiamide and diaminodiphenyl sulfone in each of the curing agents for surface material and core material independently is 3∼7:7∼3, preferably 4∼6:6∼4.

3. A method for the preparation of a halogen-free composite-base CEM-3 copper clad laminate according to claim 1 or 2, wherein the method comprises the following steps:
1) preparing a resin glue for the surface material using a resin composition containing the filler composition for the surface material and the curing agent, and then soaking a fiberglass cloth into the resin glue to prepare the surface material;
2) preparing a resin glue for the core material using a resin composition containing the filler composition used for the core material and the curing agent, and then soaking a fiberglass paper into the resin glue to prepare core material; and
3) stacking at least one piece of the core material, pasting at least one piece of the surface material onto each of the top and bottom surfaces of the stacked at least one piece of the core material, covering copper foil on one or both sides, and conducting heat pressing forming to obtain the halogen-free composite-base CEM-3 copper clad laminate.

4. The method according to claim 3 wherein, the epoxy resin is selected from the group consisting of a mixture of bisphenol A type epoxy resin and phosphorus-containing epoxy resin, a mixture of phenol formaldehyde epoxy resin and phosphorus-containing epoxy resin, and a mixture of a combination of bisphenol A type epoxy resin and phenol formaldehyde epoxy resin and phosphorus-containing epoxy resin;
preferably, phosphorus content of the phosphorus-containing epoxy resin is 1∼5%, and epoxy equivalent is 150∼500g/eq, more preferably, the phosphorus content is 2∼3%, and the epoxy equivalent is 250∼400g/eq;
preferably, the phosphorus-containing epoxy resin is phosphorus and nitrogen containing epoxy resin;
preferably, phosphorus content of phosphorus and nitrogen containing epoxy resin is 1∼5%, nitrogen content thereof is 0.10-10%, and epoxy equivalent is 150∼500g/eq, more preferably, the phosphorus content is 1.5∼2.5%, the nitrogen content is 0.3∼2%, and the epoxy equivalent is 250∼350g/eq;
preferably, the weight of the phosphorus atoms contained in the epoxy resin is 1.0∼2.4wt% of the total weight of the epoxy resin, curing agent and curing promoter, more preferably 1.5∼2.0wt%.

5. The method according to any of claims 3 to 4 wherein the curing promotor is imidazole type curing promotor, preferably any one or a combination of at least two selected from the group consisting of 2- methylimidazole, 1- methylimidazole, 2-ethyl -4- methyl imidazole, 2- phenyl imidazole, 2-undecyl-imidazole and 2- phenyl - 4- methylimidazole.

6. The method according to any of claims 3 to 5 wherein the solvent of the resin glue for the surface material and the solvent of the resin glue for the core material are independently one or a combination of at least two selected from the group consisting of N,N-dimethyl-Formamide, acetone, butanone, cyclohexanone, 2-methoxyethanol and dipropylene glycol methyl ether acetate;
preferably, solid content of the resin glue for the surface material is 65-75%; preferably, solid content of the resin glue for the core material is 60-80%.

7. The method according to any of claims 3 to 6 wherein the step (1) is conducted at 130∼210 °C to prepare the surface material;
preferably, the step (2) is conducted at 130∼210 °C to prepare the core material; preferably, the heat pressing forming in the step (3) is conducted at a temperature of 80∼200 °C and a pressure of 10∼100 kg/cm².

## Patentansprüche

1. Halogenfreies kupferkaschiertes CEM-3-Laminat auf Verbundbasis, bestehend aus Kupferfolie, Oberflächenmaterial und Kernmaterial, **dadurch gekennzeichnet, dass** das Oberflächenmaterial und das Kernmaterial Füllstoffzusammensetzungen, die aus organischen und anorganischen Füllstoffen bestehen, und Härter umfassen,
wobei das Oberflächenmaterial die folgenden Komponenten umfasst:
| | |
|---|---|
| Epoxidharz | 60∼120 Gewichtsteile |
| Härter | 2,0∼6,0 Gewichtsteile |
| Härtungsbeschleuniger | 0,01∼1,0 Gewichtsteile |
| Füllstoffzusammensetzung für das Oberflächenmaterial | 20∼100 Gewichtsteile |
und
wobei das Kernmaterial folgende Komponenten umfasst, bezogen auf Gewichtsteile:
| | |
|---|---|
| Epoxidharz | 60∼120 Gewichtsteile |
| Härter | 2,0∼6,0 Gewichtsteile |
| Härtungsbeschleuniger | 0,01∼1,0 Gewichtsteile |
| Füllstoffzusammensetzung für das Kernmaterial | 50∼200 Gewichtsteile, |
wobei die Füllstoffzusammensetzung für das Oberflächenmaterial umfasst:
| | |
|---|---|
| Aluminiumhydroxid | 20∼50 Gewichtsteile |
| Melamincyanurat | 5∼40 Gewichtsteile |
| Böhmit | 0∼30 Gewichtsteile |
| Bariumsulfat | 0∼30 Gewichtsteile |
und
wobei die Gehalte an Böhmit und Bariumsulfat nicht zugleich 0 sind; und
wobei die Füllstoffzusammensetzung für das Kernmaterial umfasst:
| | |
|---|---|
| Aluminiumhydroxid | 20∼50 Gewichtsteile |
| Melamincyanurat | 5∼50 Gewichtsteile |
| Böhmit | 0∼40 Gewichtsteile |
| Bariumsulfat | 0∼40 Gewichtsteile |
| Talkumpulver | 0∼40 Gewichtsteile |
| Siliciumdioxid | 0∼40 Gewichtsteile, |
und
wobei die Gehalte an Böhmit, Bariumsulfat, Talkumpulver und Siliciumdioxid nicht zugleich 0 sind und
wobei jeder der Härter für das Oberflächenmaterial und das Kernmaterial unabhängig Dicyandiamid und Diaminodiphenylsulfon umfasst.

2. Halogenfreies kupferkaschiertes CEM-3-Laminat auf Verbundbasis nach Anspruch 1, wobei die Massenverhältnisse von Dicyandiamid und Diaminodiphenylsulfon in jedem der Härter für Oberflächenmaterial und Kernmaterial unabhängig 3∼7:7∼3, vorzugsweise 4∼6:6∼4, sind.

3. Verfahren zur Herstellung eines halogenfreien kupferkaschierten CEM-3-Laminats auf Verbundbasis nach Anspruch 1 oder 2, wobei das Verfahren die folgenden Schritte umfasst:
1) Herstellen eines Harzklebers für das Oberflächenmaterial unter Verwendung einer Harzzusammensetzung, welche die Füllstoffzusammensetzung für das Oberflächenmaterial und den Härter enthält, und anschließendes Einweichen eines Glasfasergewebes in dem Harzkleber, um das Oberflächenmaterial herzustellen;
2) Herstellen eines Harzklebers für das Kernmaterial unter Verwendung einer Harzzusammensetzung, welche die für das Kernmaterial verwendete Füllstoffzusammensetzung und den Härter enthält, und anschließendes Einweichen eines Glasfaserpapiers in dem Harzkleber, um das Kernmaterial herzustellen; und
3) Stapeln von mindestens einem Stück des Kernmaterials, Aufbringen von mindestens einem Stück des Oberflächenmaterials auf jede der oberen und unteren Oberflächen des gestapelten mindestens einen Stücks des Kernmaterials, Aufbringen von Kupferfolie auf einer oder beiden Seiten, und Durchführen von Warmpressformen, um das halogenfreie kupferkaschierte CEM-3-Laminat auf Verbundbasis zu erhalten.

4. Verfahren nach Anspruch 3, wobei das Epoxidharz ausgewählt ist aus der Gruppe bestehend aus einer Mischung aus Epoxidharz vom Bisphenol-A-Typ und einem phosphorhaltigen Epoxidharz, einer Mischung aus Phenol-Formaldehyd-Epoxidharz und phosphorhaltigem Epoxidharz und einer Mischung aus einer Kombination von Epoxidharz vom Bisphenol-A-Typ und Phenol-Formaldehyd-Epoxidharz und phosphorhaltigem Epoxidharz;
wobei bevorzugt der Phosphorgehalt des phosphorhaltigen Epoxidharzes 1∼5% beträgt und das Epoxidäquivalent 150∼500 g/eq beträgt, wobei bevorzugter der Phosphorgehalt 2∼3% beträgt und das Epoxidäquivalent 250∼400 g/eq beträgt; wobei bevorzugt das phosphorhaltige Epoxidharz ein phosphor- und stickstoffhaltiges Epoxidharz ist,
wobei bevorzugt der Phosphorgehalt des phosphor- und stickstoffhaltigen Epoxidharzes 1∼5% beträgt, der Stickstoffgehalt davon 0,10∼10% beträgt und das Epoxidäquivalent 150∼500 g/eq beträgt, wobei bevorzugter der Phosphorgehalt 1,5∼2,5% beträgt, der Stickstoffgehalt 0,3∼2% beträgt und das Epoxidäquivalent 250∼350 g/eq beträgt,
wobei bevorzugt das Gewicht der in dem Epoxidharz enthaltenen Phosphoratome 1,0∼2,4 Gew.-% beträgt, bezogen auf das Gesamtgewicht des Epoxidharzes, Härters und Härtungsbeschleunigers, bevorzugt 1,5∼2,0 Gew.-%.

5. Verfahren nach einem der Ansprüche 3 bis 4, wobei der Härtungsbeschleuniger ein Härtungsbeschleuniger vom Imidazoltyp ist, bevorzugt irgendeiner oder eine Kombination von mindestens zweien ausgewählt aus der Gruppe bestehend aus 2-Methylimidazol, 1-Methylimidazol, 2-Ethyl-4-methylimidazol, 2-Phenylimidazol, 2-Undecylimidazol und 2-Phenyl-4-methylimidazol.

6. Verfahren nach einem der Ansprüche 3 bis 5, wobei das Lösungsmittel des Harzklebers für das Oberflächenmaterial und das Lösungsmittel des Harzklebers für das Kernmaterial unabhängig eines oder eine Kombination von mindestens zweien ausgewählt aus der Gruppe bestehend aus N,N-Dimethylformamid, Aceton, Butanon, Cyclohexanon, 2-Methoxyethanol und Dipropylenglycolmethyletheracetat sind;
wobei bevorzugt der Feststoffgehalt des Harzklebers für das Oberflächenmaterial 65∼75% beträgt,
wobei bevorzugt der Feststoffgehalt des Harzklebers für das Kernmaterial 60∼80% beträgt.

7. Verfahren nach einem der Ansprüche 3 bis 6, wobei Schritt (1) bei 130∼210 °C durchgeführt wird, um das Oberflächenmaterial herzustellen;
wobei bevorzugt Schritt (2) bei einer Temperatur von 130∼210 °C durchgeführt wird, um das Kernmaterial herzustellen;
wobei bevorzugt das Warmpressformen in Schritt (3) bei einer Temperatur von 80∼200 °C und einem Druck von 10∼100 kg/cm² durchgeführt wird.

## Revendications

1. Stratifié plaqué cuivre CEM-3 (matériau époxy composite) à base de composite dépourvu d'halogène consistant en une feuille de cuivre, un matériau de surface et un matériau d'âme, **caractérisé en ce que** le matériau de surface et le matériau d'âme comprennent des compositions de charge, consistant en des charges organiques et inorganiques, et des agents de durcissement,
dans lequel le matériau de surface comprend les composants suivants :
| | |
|---|---|
| résine époxy | 60∼120 parties en poids |
| agent de durcissement | 2,0∼6,0 parties en poids |
| promoteur de durcissement | 0,01∼1,0 partie en poids |
| composition de charge pour le matériau de surface | 20∼100 parties en poids, |
et
le matériau d'âme comprend les composants suivants selon les parties en poids :
| | |
|---|---|
| résine époxy | 60∼120 parties en poids |
| agent de durcissement | 2,0∼6,0 parties en poids |
| promoteur de durcissement | 0,01∼1,0 partie en poids |
| composition de charge pour le matériau d'âme | 50∼200 parties en poids, |
dans lequel la composition de charge pour le matériau de surface comprend :
| | |
|---|---|
| hydroxyde d'aluminium | 20∼50 parties en poids |
| cyanurate de mélamine | 5∼40 parties en poids |
| boéhmite | 0∼30 parties en poids |
| sulfate de baryum | 0∼30 parties en poids, |
et
les teneurs de la bohémite et du sulfate de baryum ne sont pas de 0 simultanément ; et
dans lequel la composition de charge pour le matériau d'âme comprend :
| | |
|---|---|
| hydroxyde d'aluminium | 20∼50 parties en poids |
| cyanurate de mélamine | 5∼50 parties en poids |
| bohémite | 0∼40 parties en poids |
| sulfate de baryum | 0∼40 parties en poids |
| poudre de talc | 0∼40 parties en poids |
| dioxyde de silicium | 0∼40 parties en poids, |
et
les teneurs de la boéhmite, du sulfate de baryum, de la poudre de talc et du dioxyde de silicium ne sont pas de 0 simultanément, et
dans lequel chacun des agents de durcissement pour le matériau de surface et le matériau d'âme comprend indépendamment du dicyandiamide et de la diamino diphényl sulfone.

2. Stratifié plaqué cuivre CEM-3 à base de composite dépourvu d'halogène selon la revendication 1, dans lequel les rapports en masse de dicyandiamide et de diaminodiphényl sulfone dans chacun des agents de durcissement pour le matériau de surface et le matériau d'âme sont indépendamment de 3∼7:7∼3, de préférence 4∼6:6∼4.

3. Procédé de préparation d'un stratifié plaqué cuivre CEM-3 à base de composite dépourvu d'halogène selon la revendication 1 ou 2, dans lequel le procédé comprend les étapes suivantes :
1) la préparation d'une colle de résine pour le matériau de surface à l'aide d'une composition de résine contenant la composition de charge pour le matériau de surface et l'agent de durcissement, puis le trempage d'un tissu de fibre de verre dans la colle de résine pour préparer le matériau de surface ;
2) la préparation d'une colle de résine pour le matériau d'âme à l'aide d'une composition de résine contenant la composition de charge utilisée pour le matériau d'âme et l'agent de durcissement, puis le trempage d'un papier de fibre de verre dans la colle de résine pour préparer le matériau d'âme ; et
3) l'empilement d'au moins une pièce du matériau d'âme, le collage d'au moins une pièce du matériau de surface sur chacune des surfaces haute et basse de l'au moins une pièce empilée du matériau d'âme, le recouvrement d'une feuille de cuivre sur l'un des côtés ou les deux, et la réalisation d'un formage par pressage à chaud pour obtenir le stratifié plaqué cuivre CEM-3 à base de composite dépourvu d'halogène.

4. Procédé selon la revendication 3, dans lequel la résine époxy est choisie dans le groupe consistant en un mélange de résine époxy de type bisphénol A et de résine époxy contenant du phosphore, un mélange de résine époxy phénol formaldéhyde et de résine époxy contenant du phosphore, et un mélange d'une combinaison de résine époxy de type bisphénol A et de résine époxy phénol formaldéhyde et d'une résine époxy contenant du phosphore ;
de préférence, la teneur en phosphore de la résine époxy contenant du phosphore est de 1∼5 %, et l'équivalent époxy est de 150∼500 g/eq, de manière davantage préférée la teneur en phosphore est de 2∼3 %, et l'équivalent époxy est de 250∼400 g/eq ;
de préférence, la résine époxy contenant du phosphore est une résine époxy contenant du phosphore et de l'azote ;
de préférence, la teneur en phosphore de la résine époxy contenant du phosphore et de l'azote est de 1∼5 %, sa teneur en azote est de 0,10∼10 %, et l'équivalent époxy est de 150∼500 g/eq, de manière davantage préférée la teneur en phosphore est de 1,5∼2,5 %, la teneur en azote est de 0,3∼2 %, et l'équivalent époxy est de 250∼350 g/eq ;
de préférence, le poids des atomes de phosphore contenus dans la résine époxy est de 1,0∼2,4 % en poids du poids total de la résine époxy, de l'agent de durcissement et du promoteur de durcissement, de manière davantage préférée de 1,5∼2,0 % en poids.

5. Procédé selon l'une quelconque des revendications 3 à 4, dans lequel le promoteur de durcissement est un promoteur de durcissement de type imidazole, de préférence l'un quelconque ou une combinaison d'au moins deux éléments choisis dans le groupe consistant en le 2-méthylimidazole, le 1-méthylimidazole, le 2-éthyl-4-méthyl imidazole, le 2-phényl imidazole, le 2-undécyl-imidazole et le 2-phényl-4-méthylimidazole.

6. Procédé selon l'une quelconque des revendications 3 à 5, dans lequel le solvant de la colle de résine pour le matériau de surface et le solvant de la colle de résine pour le matériau d'âme sont indépendamment l'un ou une combinaison d'au moins deux éléments choisis dans le groupe consistant en le N,N-diméthyl-formamide, l'acétone, la butanone, la cyclohexanone, le 2-méthoxyéthanol et l'acétate de dipropylène glycol méthyl éther ;
de préférence, la teneur en matière sèche de la colle de résine pour le matériau de surface est de 65 ∼75 % ;
de préférence, la teneur en matière sèche de la colle de résine pour le matériau d'âme est de 60∼80 %.

7. Procédé selon l'une quelconque des revendications 3 à 6, dans lequel l'étape (1) est réalisée à 130∼210 °C pour préparer le matériau de surface ;
de préférence, l'étape (2) est réalisée à 130∼210 °C pour préparer le matériau d'âme ;
de préférence, le formage par pressage à chaud dans l'étape (3) est réalisé à une température de 80∼200 °C et une pression de 10∼100 kg/cm².
